# FASCICULE DE BREVET EUROPEEN

(11) **EP 2 762 744 B1**
(45) Date de publication et mention de la délivrance du brevet: **27.05.2020**
(21) Numéro de dépôt: 14152601.2
(22) Date de dépôt: 27.01.2014
(51) Int. Cl.: F16F 7/12

(54) **Dispositif absorbeur de choc**
Stoßdämpfungsvorrichtung
Shock-absorber device

(30) Priorité: 31.01.2013 FR 1350824
(43) Date de publication de la demande: 06.08.2014
(73) Titulaire: Eiffage Construction Metallique, 92700 Colombes (FR)
(72) Inventeur: Gavoty, Simon, 13008 MARSEILLE (FR); Meillaz, Maric, 91330 YERRES (FR)
(74) Mandataire: Plasseraud IP

(56) Documents cités:
- WO-A1-2007/009142
- GB-A- 2 204 108
- US-A- 4 221 413
- US-A- 4 492 291
- US-A1- 2010 287 715

## Description

La présente invention est relative aux dispositifs absorbeurs de choc, notamment pour une installation de protection provisoire visant à protéger une structure contre un impact accidentel d'une charge à forte énergie cinétique.

Plus particulièrement, l'invention concerne un plancher de protection que l'on peut installer, au dessus d'une structure à protéger typiquement horizontale, de manière provisoire, de façon à fournir une protection pendant des opérations de manutention au dessus de ladite structure et de façon à pouvoir aussi enlever facilement ce plancher une fois lesdites opérations achevées.

Le dispositif absorbeur de choc est adapté pour dissiper l'énergie cinétique d'un éventuel impact accidentel, l'absorption d'énergie étant réalisée sous forme de déformation plastique.

On connaît du document US4492291 un tel dispositif absorbeur de choc, mais celui-ci est complexe, spécifique et par conséquent couteux ; de plus il n'est pas prévu de pouvoir l'installer et le démonter facilement. Il en est de même s'agissant pour le document US2010287715.

Il est donc apparu un besoin de proposer une solution plus simple à mettre en œuvre, qui puisse convenir à de multiples applications et qui de préférence utilise des éléments très courants.

A cet effet, l'invention propose notamment un dispositif absorbeur de choc, en particulier pour amortir des chocs d'énergie supérieure à 50 kJ d'un objet impactant pouvant impacter ledit dispositif selon une direction de travail Z, destiné à protéger une **structure à protéger**, comprenant :
- une pluralité de zones d'appui, destinées à venir en appui sur la structure à protéger, et s'étendant sensiblement dans un **plan de référence XY**,
- une **plaque frontale** métallique disposée à l'opposé de la structure à protéger,
- un empilage intermédiaire agencé entre la plaque frontale et les zones d'appui, comprenant au moins :
   o une pluralité de premiers profilés tubulaires métalliques disposés parallèlement à un premier axe du plan de référence et espacés les uns des autres transversalement selon le deuxième axe du plan de référence, les premiers profilés formant une première couche,
   o une pluralité de deuxièmes profilés tubulaires métalliques disposés parallèlement au premier axe et espacés les uns des autres transversalement selon le deuxième axe , les deuxièmes profilés formant une deuxième couche,
   o une troisième couche (couche intermédiaire de diffusion), interposée entre les première et deuxième couches, formée par une plaque métallique ou des troisièmes profilés tubulaires disposés parallèlement au deuxième axe et espacés les uns des autres transversalement selon le premier axe, caractérisé en ce que les positions des premiers et deuxièmes profilés sont décalées les unes par rapport aux autres selon le deuxième axe, de sorte qu'à aucun endroit un deuxième profilé ne se trouve au-dessus d'un premier profilé selon la direction de travail Z.

Grâce à ces dispositions, en cas d'impact d'un objet lourd et/ou rapide sur la surface de la plaque frontale, l'énergie cinétique est absorbée par déformation plastique du métal et les efforts sont diffusés sur une zone de plus en plus étendue au fur et à mesure qu'ils cheminent vers les zones d'appui. La déformation plastique des plaques et des profilés est favorisée par les espaces vides disponibles dans l'empilage.

Un autre avantage est que l'on conserve une complète capacité de circulation des individus et du matériel (voire engins légers) sur la plaque frontale pendant que le dispositif absorbeur de choc est installé.

Dans des modes de réalisation du procédé selon l'invention, on peut éventuellement avoir recours en outre à l'une et/ou à l'autre des dispositions suivantes :
- une plaque de base est interposée entre les zones d'appui et l'empilage intermédiaire ; moyennant quoi on peut installer le dispositif sur une surface discontinue ou non plane ; cela participe aussi à favoriser une meilleure répartition des efforts sur la surface à protéger,
- la direction de travail est verticale et le plan de référence horizontal ; ce qui représente la configuration habituelle pour la prévention des risques des opérations de manutention ; les différentes couches et empilages étant mis en oeuvre facilement dans le plan horizontal ;
- le dispositif est dépourvu de fixation et dépourvu de soudure entre les éléments qui le composent ; moyennant quoi il est très facile à installer, et facile à désinstaller ;
- les premiers profilés sont espacés régulièrement d'une première distance D1, les deuxièmes profilés sont espacés régulièrement d'une deuxième distance D2, et la première distance D1 est sensiblement égale à la deuxième distance D2 ; de sorte que le dispositif peut se conformer à une géométrie très simple dite 'en quinconce', ce qui facilite son installation ;
- les plaques, notamment frontale, et les profilés sont réalisés en acier doux ; moyennant quoi la déformation plastique peut être maximisée en cas d'impact accidentel sur le dispositif de protection ;
- le dispositif peut comprendre en outre des couches additionnelles dans l'empilage intermédiaire ; moyennant quoi on améliore encore la diffusion des efforts en cas d'impact accidentel ;
- les profilés peuvent présenter une section carrée ou rectangulaire ; de sorte que l'on améliore ainsi la stabilité naturelle de l'empilage,
- l'espacement entre les premiers profilés est compris entre 3 fois et 20 fois la dimension horizontale du carré ou du rectangle, et de manière plus préférée entre 3 fois et 10 fois ladite dimension ; de sorte que l'on optimise la répartition des déformations plastiques entre les plaques et les profilés tubulaires ainsi que la diffusion des efforts.

L'invention se rapporte aussi à un procédé pour mettre en oeuvre un dispositif absorbeur de choc comprenant au moins les étapes :
**a-** définir une pluralité de zones d'appui par rapport à une structure à protéger,
**b-** mettre en place une pluralité de premiers profilés tubulaires métalliques disposés parallèlement à un premier axe d'un plan de référence et espacés les uns des autres transversalement selon le deuxième axe du plan de référence,
**c**- mettre en place une couche intermédiaire formée par une plaque intermédiaire métallique ou formée par des troisièmes profilés tubulaires métalliques disposés parallèlement au deuxième axe et espacés les uns des autres transversalement selon le premier axe,
**d-** mettre en place une pluralité de deuxièmes profilés tubulaires métalliques disposés parallèlement au premier axe et espacés les uns des autres transversalement selon le deuxième axe,
**e-** mettre en place une plaque frontale métallique destinée à être impactée en cas d'impact accidentel, en particulier de l'impact d'un objet lourd ayant une énergie cinétique supérieure à 50 kJ.

Optionnellement, le procédé peut comprendre en outre avant l'étape b- :
a1- mettre en place une plaque de base métallique sur la surface à protéger, sur laquelle seront posés ensuite les premiers profilés.

Optionnellement, on peut aussi selon le procédé intercaler des couches intermédiaires additionnelles en nombre quelconque au-dessus des deuxièmes profilés, avant de poser la plaque frontale.

D'autres caractéristiques et avantages de l'invention apparaîtront au cours de la description suivante de deux de ses formes de réalisation, données à titre d'exemples non limitatifs, en regard des dessins joints sur lesquels :
- la figure 1 est une vue générale en coupe d'un premier mode de réalisation d'un dispositif absorbeur de choc selon l'invention,
- la figure 2 est une vue en perspective du dispositif de la figure 1,
- la figure 3 montre une vue en perspective d'un deuxième mode de réalisation,
- la figure 4 montre une variante du premier mode de réalisation,
- la figure 5 montre le dispositif de la figure 1 après l'absorption d'un impact.

Sur les différentes figures, les mêmes références désignent des éléments identiques ou similaires.

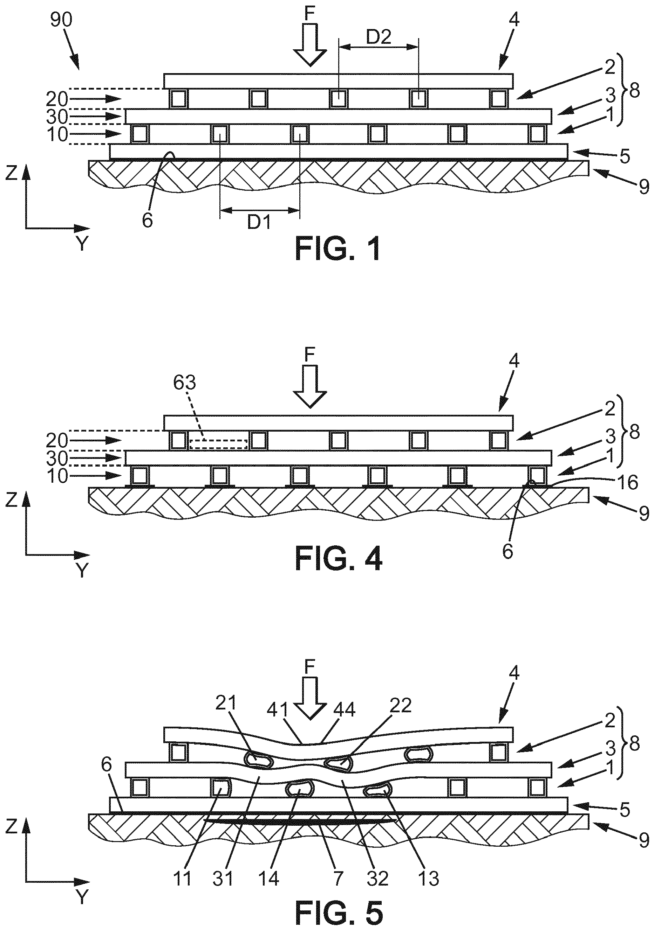

La figure 1 représente un exemple de dispositif absorbeur de choc **90** selon un premier mode de réalisation de l'invention.

Ce dispositif se présente comme un plancher de protection, s'étendant dans un plan horizontal **XY.** Ce plancher protège une structure sous-jacente **9** contre une chute accidentelle d'un objet lourd, par exemple lors d'opérations de manutention d'objets lourds se déroulant au dessus de la structure sous-jacente à protéger. La direction verticale **Z** d'impact potentiel est aussi appelée direction de travail.

Ce genre de situation peut se produire par exemple lors des opérations de maintenance ou de démantèlement d'une centrale nucléaire, en particulier dans le bâtiment principal (dit 'bâtiment réacteur') hébergeant le cœur du réacteur ; en effet, on est amené à manutentionner des objets au dessus de la dalle surplombant le cœur du réacteur, et il faut éviter tout risque d'endommager ladite dalle.

Toutefois, ce genre de situation peut se présenter pour protéger n'importe quel sol ou n'importe quelle structure d'un aléa possible de manutention.

De même, la mise en oeuvre de l'invention n'est pas limitée à une direction de travail **Z** verticale, la direction Z peut être aussi horizontale et dans ce cas la direction X est verticale. Cette disposition peut être utilisée pour protéger une structure d'un impact d'un véhicule se déplaçant horizontalement comme un véhicule routier, un véhicule ferroviaire ou un navire.

En revenant sur l'exemple de la figure 1, le dispositif absorbeur de choc **90** comprend un ensemble superposé d'une plaque de base **5**, d'un empilage intermédiaire **8**, et d'une plaque frontale **4** disposée en partie supérieure.

Plus précisément, selon l'exemple illustré ici, la plaque frontale **4** est métallique, disposée en position supérieure du dispositif, à savoir à l'opposé de la structure à protéger 9. Il s'agit d'une plaque métallique d'épaisseur constante, typiquement d'épaisseur comprise entre 10 et 150 mm, et de grandes dimensions dans le plan XY, typiquement plusieurs mètres. Elle est réalisée en acier doux ayant une faible limite élastique et un domaine de déformation plastique relativement étendu. On pourra choisir par exemple de l'acier de construction S235 très courant.

La plaque frontale peut être pourvue de motifs de surface pouvant contribuer à une fonction antidérapage, et/ou de trous traversants de petite dimension pour laisser traverser des liquides. De façon préférée, ce peut être une plaque plate issue de laminoir sans motif ni trou, ce qui en fait un produit métallurgique standard, très bon marché et de très bonne disponibilité.

La plaque de base **5** est également métallique, ses caractéristiques peuvent être similaires à celles de la plaque frontale décrite plus haut, toutefois l'épaisseur et les dimensions peuvent être différentes. La plaque de base **5** vient en appui sur la structure à protéger **9** au niveau de zones d'appui **6**, qui sont multiples et peuvent s'étendre sur tout ou partie de la surface à protéger. Les zones d'appui **6** appartiennent à la plaque de base **5** et repose sur la structure à protéger.

L'empilage intermédiaire **8** est agencé entre la plaque frontale et la plaque de base 5. L'empilage intermédiaire **8** comprend une pluralité de premiers profilés **1** tubulaires métalliques disposés parallèlement au premier axe X et espacés les uns des autres transversalement selon le deuxième axe Y, et une pluralité de deuxièmes profilés **2** tubulaires métalliques disposés parallèlement à l'axe X et espacés les uns des autres transversalement selon l'axe Y, mais positionnés de façon décalée en Y par rapport aux premiers profilés.

La pluralité des premiers profilés **1** forme ainsi une première couche **10** de l'empilage, et la pluralité de deuxièmes profilés **2** forme ainsi une deuxième couche **20** de l'empilage.

De plus, l'empilage intermédiaire **8** comprend une plaque intermédiaire **3** interposée entre les première et deuxième couches **1**,**2**, cette plaque métallique **3** forme une troisième couche **30** que l'on peut appeler couche de diffusion des efforts.

La plaque intermédiaire 3 est également métallique, ses caractéristiques sont similaires à celles de la plaque frontale **4** décrite plus haut.

Dans l'exemple illustré ici, les profilés tubulaires **1**,**2** présentent une section carrée creuse de dimension extérieure typiquement comprise entre 20 mm et 400 mm, avec quelques millimètres d'épaisseur, et avec une longueur axiale de plusieurs mètres, typiquement de 2 à 12 mètres. Ces profilés tubulaires sont réalisés en acier doux, et sont des composants métallurgiques standard faciles à approvisionner et peu coûteux. Il faut noter que la section peut être rectangle au lieu de carrée, dans les deux cas, on obtient une très bonne stabilité de l'empilage.

On peut ainsi installer, au dessus de la structure à protéger **9**, de manière provisoire, de façon à fournir une protection pendant des opérations de manutention au dessus de ladite structure **90** et de façon à pouvoir aussi enlever facilement ce plancher une fois lesdites opérations achevées. Il est possible de marcher et faire circuler des engins sur la plaque frontale, et par conséquent le dispositif de protection n'apporte pas de gêne exceptée une rehausse.

Il faut remarquer que l'installation d'un tel dispositif ne requiert ni vissage ni soudure ni fixation d'aucune sorte ; en effet, les éléments qui constituent l'assemblage décrit ci-dessus sont simplement posés les uns sur les autres.

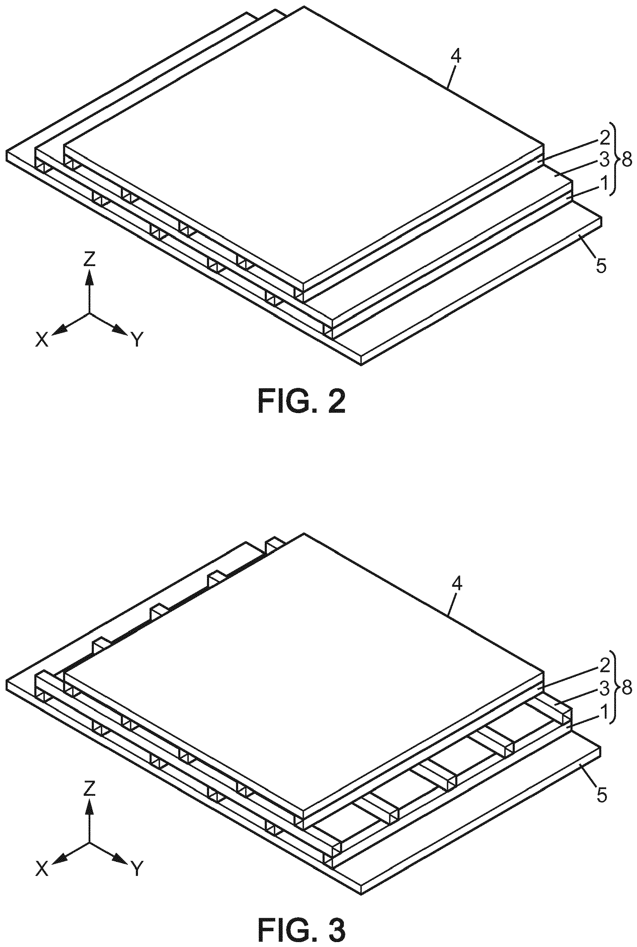

Selon un second mode de réalisation illustré à la figure 3, la troisième couche 30 ('couche intermédiaire de diffusion') n'est pas une plaque métallique continue, mais est formée par un arrangement de troisièmes profilés tubulaires **3** disposés parallèlement au deuxième axe Y et espacés les uns des autres transversalement selon le premier axe **X.** Les troisièmes profilés tubulaires 3 sont identiques ou analogues aux premiers ou deuxièmes profilés tubulaires, mais disposés orthogonalement. Le comportement du dispositif de protection en cas d'impact est très similaire à celui du premier mode de réalisation. L'utilisation de troisièmes profilés rend plus facile la manutention des éléments métalliques pour l'installation du plancher ou son retrait, les profilés étant moins lourd que les plaques.

Dans tous les modes de réalisations, ceux déjà présentés et ceux décrits plus bas, on peut intercaler des bandes de néoprène sous les zones d'appui, plus précisément entre les zones d'appui et la structure à protéger. Ces bandes de néoprène de quelques millimètres d'épaisseur participent à la diffusion des efforts.

La figure 4 représente une variante du premier mode de réalisation, qui peut être appliquée aussi au deuxième mode de réalisation, dans lequel la plaque de base 5 est remplacée par des cales **16** qui forment une pluralité de zones d'appui **6.** Cette configuration est avantageuse dans le cas où la surface à protéger n'est pas plane mais présente des différences de niveau ; on rattrape alors ces différences par des cales de hauteur différente de manière à ce que les premiers profilés 1 reposent bien à plat sur ces cales.

On pourra remarquer que dans les exemples décrits ci-dessus, à aucun endroit un deuxième profilé ne se trouve au-dessus d'un premier profilé selon la direction de travail **Z.**

La figure 5 représente le dispositif de protection de la figure 1 après l'occurrence d'un impact accidentel, en particulier de l'impact d'un objet lourd ayant une énergie cinétique supérieure à 50 kJ. Comme illustré, le point d'impact **41** se situe dans une zone de la plaque frontale **4** entre les positions des deuxièmes profilés **21** et **22.** La plaque frontale 4 se déforme plastiquement au moins dans toute la zone **44** comprise entre les deuxièmes profilés **21** et **22.** Lesdits profilés **21** et **22** reprennent les efforts subis par la plaque **4** et s'écrasent eux aussi au moins partiellement par voie de conséquence. Les efforts sont transmis de fait également à la plaque intermédiaire **3** en particulier autour des zones repérées **31** et **32.** La plaque intermédiaire **3** se déforme aussi plastiquement d'une part, et d'autre part transmet les efforts correspondants aux premiers profilés repérés **11**, **13** et **14**, lesquels se déforment à leur tour et transmettent les efforts subis vers la structure à protéger **9.**

On remarque que, plus on descend dans l'empilage, plus la surface concernée augmente, ce qui représente un phénomène de diffusion qui tend à répartir les efforts sur une surface de plus en plus grande, pour au final les transmettre à la structure à protéger sur une zone **7** s'étendant sur une grande surface dans le plan **XY.** Par conséquent, la pression sur la surface de la structure à protéger **9** est bien moins grande que dans le cas où les efforts sont transmis par un empilage direct.

Avantageusement ici, il y a toujours un espace libre selon la direction verticale, ce qui a pour effet de reporter les efforts sur les zones voisines qui s'étendent sur une surface plus importante.

Il faut remarquer que si l'impact se situe au-dessus d'un deuxième profilé, par exemple celui référencé **21**, un espace libre reste disponible entre les premiers profilés **11** et **14**, et la diffusion des efforts pour amoindrir la pression sur la surface de la structure à protéger opère tout aussi bien.

Il faut noter qu'on peut avoir une (voire plusieurs) différence de niveau dans la structure à protéger **9**, on adapte alors les hauteurs, soit en rajoutant des couches à l'empilage soit en utilisant des cales de plus grande hauteur. On peut aussi avoir des rails déjà disposés sur la structure à protéger **9.**

Dans un cas géométrique très simple, on dispose les premiers profilés et les seconds profilés en quinconce comme représenté aux figures, à savoir avec une première distance **D1** séparant les premiers profilés entre eux, et une deuxième distance **D2** séparant les seconds profilés entre eux. Avantageusement on choisit D1 égal ou voisin de D2.

Avantageusement, l'espacement entre les profilés peut être compris entre 3 fois et 20 fois la dimension horizontale du carré, ou préférentiellement entre 3 fois et 10 fois, l'espacement choisi étant un optimum quant à l'absorption et la diffusion surfacique de l'énergie de l'impact.

Avantageusement en vue de faciliter l'installation, notamment lorsque la direction de travail Z est horizontale, on peut utiliser des entretoises **63** d'espacement des profilés, ce qui permet de placer les profilés et les entretoises les uns à la suite des autres, sans autre moyens de maintien supplémentaire.

Il est à noter que dans le cas où Z n'est pas vertical, mais par exemple horizontale, on peut quand même installer le dispositif absorbeur de choc sans soudures ou fixations intermédiaires ; on maintient l'assemblage par une pluralité de serre-joints qui maintiennent l'assemblage selon la direction Z, et que l'on peut facilement retirer pour désinstaller le tout.

Il faut noter que les différents paramètres qui suivent peuvent être choisis en vue d'optimiser l'absorption et la diffusion surfacique de l'énergie de l'impact : l'épaisseur des plaques, les dimensions des profilés tubulaires, l'espacement des tubes, le nombre de couches dans l'empilement intermédiaire.

## Revendications

1. **Dispositif** absorbeur de choc, en particulier pour amortir des chocs d'énergie supérieure à 50 kJ d'un objet impactant pouvant impacter ledit dispositif selon une direction de travail (Z), destiné à protéger une **structure à protéger (9)**, comprenant :
- une pluralité de **zones d'appui** (6), destinées à venir en appui sur la structure à protéger, et s'étendant sensiblement dans un **plan de référence** (XY),
- une **plaque frontale** (4) métallique disposée à l'opposé de la structure à protéger,
- un **empilage** (8) intermédiaire agencé entre la plaque frontale et les zones d'appui, comprenant au moins :
- une pluralité de **premiers profilés tubulaires (1)** métalliques disposés parallèlement à un premier axe X du plan de référence et espacés les uns des autres transversalement selon le deuxième axe (Y) du plan de référence, les premiers profilés (1) formant une première couche,
- une pluralité de **deuxièmes profilés tubulaires (2)** métalliques disposés parallèlement au premier axe (X) et espacés les uns des autres transversalement selon le deuxième axe (Y), les deuxièmes profilés formant une deuxième couche,
- une **troisième couche** (30), interposée entre les première et deuxième couches, formée par une plaque métallique ou des troisièmes profilés tubulaires (3) disposés parallèlement au deuxième axe (Y) et espacés les uns des autres transversalement selon le premier axe (X),
**caractérisé en ce que** les positions des premiers et deuxièmes profilés sont décalées les unes par rapport aux autres selon le deuxième axe (Y), *de sorte qu'à aucun endroit un deuxième profilé ne se trouve au-dessus d'un premier profilé selon la direction de travail* (Z).

2. Dispositif selon la revendication 1, dans lequel une **plaque de base** (5) est interposée entre les zones d'appui et l'empilage intermédiaire.

3. Dispositif selon l'une des revendications 1 à 2, dans lequel la direction de travail (Z) est **verticale** et le plan de référence horizontal.

4. Dispositif selon l'une des revendications 1 à 3, **dépourvu de fixation et dépourvu de soudure** entre les éléments qui le composent.

5. Dispositif selon l'une des revendications 1 à 4, dans lequel les premiers profilés sont **espacés régulièrement** d'une première distance (D1), les deuxièmes profilés sont espacés régulièrement d'une deuxième distance (D2), et la première distance (D1) est sensiblement égale à la deuxième distance (D2).

6. Dispositif selon l'une des revendications 1 à 5, dans lequel les plaques, notamment frontale, et les profilés sont réalisés en **acier doux.**

7. Dispositif selon l'une des revendications 1 à 6, comprenant en outre des **couches additionnelles** dans l'empilage intermédiaire.

8. Dispositif selon l'une des revendications 1 à 7, dans lequel les profilés (1,2) présentent une **section carrée** ou rectangulaire.

9. Dispositif selon la revendication 8, dans lequel l'espacement entre les premiers profilés est compris entre 3 fois et 20 fois la dimension horizontale du carré ou du rectangle, de manière plus préférée entre 3 fois et 10 fois ladite dimension.

10. **Procédé** pour mettre en œuvre un dispositif absorbeur de choc comprenant au moins les étapes :
**a-** définir une pluralité de **zones d'appui** (6) par rapport à une **structure à protéger (9)**,
**b-** mettre en place une pluralité de **premiers profilés tubulaires (1)** métalliques disposés parallèlement à un premier axe X d'un plan de référence (XY) et espacés les uns des autres transversalement selon le deuxième axe (Y) du plan de référence,
**c-** mettre en place une **couche intermédiaire (30)** formée par une plaque intermédiaire métallique ou formée par des troisièmes profilés tubulaires métalliques disposés parallèlement au deuxième axe (Y) et espacés les uns des autres transversalement selon le premier axe (X),
**d-** mettre en place une pluralité de **deuxièmes profilés tubulaires (2)** métalliques disposés parallèlement au premier axe (X) et espacés les uns des autres transversalement selon le deuxième axe (Y),
**e-** mettre en place une **plaque frontale** (4) métallique destinée à être impactée en cas d'impact accidentel, en particulier de l'impact d'un objet lourd ayant une énergie cinétique supérieure à 50 kJ,
**caractérisé en ce que** les positions des premiers et deuxièmes profilés sont décalées les unes par rapport aux autres selon le deuxième axe (Y), *de sorte qu'à aucun endroit un deuxième profilé ne se trouve au-dessus d'un premier profilé selon la direction de travail* (Z).

11. Procédé selon la revendication 10, comprenant en outre avant l'étape b- :
**a1-** mettre en place une **plaque de base (5)** métallique sur la surface à protéger (9), sur laquelle seront posés ensuite les premiers profilés.

## Patentansprüche

1. Stoßdämpfungsvorrichtung, insbesondere zum Dämpfen von Stößen einer Energie von mehr als 50KJ eines auftreffenden Objekts, das in einer Arbeitsrichtung (Z) auf die Vorrichtung auftreffen könnte, wobei die Vorrichtung dazu bestimmt ist, eine zu schützende Struktur (9) zu schützen, und aufweist:
- mehrere Auflagezonen (6), die dazu bestimmt sind, auf der zu schützenden Struktur aufzuliegen, und die sich im Wesentlichen in einer Referenzebene (XY) erstrecken,
- eine metallische Frontplatte (4), die auf der bezüglich der zu schützenden Struktur entgegengesetzten Seite angeordnet ist,
- einen Zwischenstapel (8), der zwischen der Frontplatte und den Auflagezonen angeordnet ist und mindestens aufweist:
- mehrere erste metallische Rohrprofile (1), die parallel zu einer ersten Achse (X) der Referenzebene angeordnet sind und gemäß der zweiten Achse (Y) der Referenzebene transversal voneinander beabstandet sind, wobei die ersten Profile (1) eine erste Schicht bilden,
- mehrere zweite metallische Rohrprofile (2), die parallel zu der ersten Achse (X) angeordnet sind und gemäß der zweiten Achse (Y) transversal voneinander beabstandet sind, wobei die zweiten Profile (2) eine zweite Schicht bilden,
- eine zwischen der ersten und zweiten Schicht liegende dritte Schicht (30), gebildet aus einer Metallplatte oder dritten Rohrprofilen (3), die parallel zur zweiten Achse (Y) angeordnet sind und gemäß der ersten Achse (X) transversal voneinander beabstandet sind,
**dadurch gekennzeichnet, dass** die Positionen der ersten und zweiten Profile gemäß der zweiten Achse (Y) relativ zueinander versetzt angeordnet sind, derart, dass sich gemäß der Arbeitsrichtung (Z) kein Ort eines zweiten Profils oberhalb eines ersten Profils befindet.

2. Vorrichtung nach Anspruch 1, in welcher eine Basisplatte (5) zwischen den Auflagezonen und dem Zwischenstapel angeordnet ist.

3. Vorrichtung nach einem der Ansprüche 1 bis 2, in welcher die Arbeitsrichtung (Z) vertikal ist und die Referenzebene horizontal ist.

4. Vorrichtung nach einem der Ansprüche 1 bis 3, die keinerlei Befestigung und keinerlei Verschweißung zwischen den Elementen, die sie bilden, aufweist.

5. Vorrichtung nach einem der Ansprüche 1 bis 4, in welcher die ersten Profile regelmäßig in einem ersten Abstand (D1) beabstandet sind, die zweiten Profile regelmäßig in einem zweiten Abstand (D2) beabstandet sind, und der erste Abstand (D1) im Wesentlichen gleich dem zweiten Abstand (D2) ist.

6. Vorrichtung nach einem der Ansprüche 1 bis 5, in welcher die Platten, insbesondere die Frontplatte, und die Profile aus Weichstahl hergestellt sind.

7. Vorrichtung nach einem der Ansprüche 1 bis 6, ferner aufweisend zusätzliche Schichten in dem Zwischenstapel.

8. Vorrichtung nach einem der Ansprüche 1 bis 7, in welcher die Profile (1, 2) quadratische oder rechteckförmige Querschnitte haben.

9. Vorrichtung nach Anspruch 8, in welcher der Zwischenraum zwischen den ersten Profilen zwischen 3 Mal und 20 Mal der horizontalen Abmessung des Quadrats oder des Rechtecks ist, stärker bevorzugt zwischen 3 Mal und 10 Mal der Abmessung.

10. Verfahren zum Herstellen einer Stoßdämpfungsvorrichtung, aufweisend mindestens die folgenden Schritte:
a- Definieren von mehreren Auflagezonen (6) bezüglich der zu schützenden Struktur (9),
b- Anordnen von mehreren ersten metallischen Rohrprofilen (1), die parallel zu einer ersten Achse (X) einer Referenzebene (XY) und transversal voneinander beabstandet gemäß der zweiten Achse (Y) der Referenzebene sind,
c- Anordnen einer Zwischenschicht (30), gebildet aus einer metallischen Zwischenplatte oder gebildet aus dritten metallischen Rohrprofilen, die parallel zur zweiten Achse (Y) sind und gemäß der ersten Achse (X) transversal voneinander beabstandet sind,
d- Anordnen von mehreren zweiten metallischen Rohrprofilen (2), die parallel zu der ersten Achse (X) und transversal voneinander beabstandet gemäß der zweiten Achse (Y) sind,
e- Anordnen einer metallischen Frontplatte (4), die dazu bestimmt ist, im Fall eines unerwünschten Auftreffens getroffen zu werden, insbesondere des Auftreffens eines schweren Objekts mit einer kinetischen Energie von mehr als 50kJ,
**dadurch gekennzeichnet, dass** die Positionen der ersten und zweiten Profile gemäß der zweiten Achse (Y) relativ zueinander versetzt angeordnet sind, derart, dass sich gemäß der Arbeitsrichtung (Z) kein Ort eines zweiten Profils oberhalb eines ersten Profils befindet.

11. Verfahren nach Anspruch 10, ferner aufweisend vor dem Schritt b-:
a1- Anordnen einer metallischen Basisplatte (5) auf der zu schützenden Oberfläche (9), auf welche anschließend die ersten Profile gelegt werden.

## Claims

1. Shock-absorbing device, in particular for damping impacts of energy greater than 50 kJ from an impacting object that may strike said device in a working direction (Z), intended to protect a structure to be protected (9), comprising:
- a plurality of bearing areas (6) intended to bear on the structure to be protected and extending substantially within a reference plane (XY),
- a metal **front plate** (4) arranged opposite the structure to be protected,
- an intermediate **stack** (8) arranged between the front plate and the bearing areas, comprising at least:
- a plurality of metal **first tubular sections (1)** arranged parallel to a first axis X of the reference plane and spaced apart from one another transversely along the second axis (Y) of the reference plane, the first sections (1) forming a first layer,
- a plurality of metal **second tubular sections (2)** arranged parallel to the first axis (X) and spaced apart from one another transversely along the second axis (Y), the second sections forming a second layer,
- a **third layer** (30), interposed between the first and second layers, formed by a metal plate or third tubular sections (3) arranged parallel to the second axis (Y) and spaced apart from one another transversely along the first axis (X),
**characterized in that** the positions of the first and second sections are offset relative to one another along the second axis (Y), such that at no location is a second section located above a first section along the working direction (Z).

2. Device according to claim 1, wherein a base plate (5) is interposed between the bearing areas and the intermediate stack.

3. Device according to one of claims 1 to 2, wherein the working direction (Z) is vertical and the reference plane horizontal.

4. Device according to one of claims 1 to 3, without attachment and without welding between its component elements.

5. Device according to one of claims 1 to 4, wherein the first sections are regularly spaced apart by a first distance (D1), the second sections are regularly spaced apart by a second distance (D2), and the first distance (D1) is substantially equal to the second distance (D2).

6. Device according to one of claims 1 to 5, wherein the plates, in particular the front plate, and the sections are made of mild steel.

7. Device according to one of claims 1 to 6, further comprising additional layers in the intermediate stack.

8. Device according to one of claims 1 to 7, wherein the sections (1, 2) have a square or rectangular cross-section.

9. Device according to claim 8, wherein the spacing between the first sections is between 3 times and 20 times the horizontal dimension of the square or rectangle, more preferably between 3 times and 10 times said dimension.

10. **Method** for implementing a shock-absorbing device comprising at least the steps of:
**a-** defining a plurality of bearing areas (6) with respect to a structure to be protected (9),
**b-** placing a plurality of metal first tubular sections (1) arranged parallel to a first axis X of a reference plane (XY) and spaced apart from one another transversely along the second axis (Y) of the reference plane,
**c-** placing an intermediate layer (30) formed by a metal intermediate plate or formed by metal third tubular sections arranged parallel to the second axis (Y) and spaced apart from one another transversely along the first axis (X),
**d-** placing a plurality of metal second tubular sections (2) arranged parallel to the first axis (X) and spaced apart from one another transversely along the second axis (Y),
**e-** placing a metal front plate (4) intended to be struck in the event of an accidental impact, in particular the impact of a heavy object having a kinetic energy greater than 50 kJ,
**characterized in that** the positions of the first and second sections are offset relative to one another along the second axis (Y), such that at no location is a second section located above a first section along the working direction (Z).

11. Method according to claim 10, further comprising prior to step **b-**:
**a1-** placing a metal base plate (5) on the surface to be protected (9), on which the first sections will then be placed.
